# EUROPEAN PATENT APPLICATION

(11) **EP 0 550 959 A1**
(43) Date of publication of application: **14.07.1993**
(21) Application number: 92310220.6
(22) Date of filing: 09.11.1992
(51) Int. Cl.: H04N 7/16

(54) **Improvements in or relating to the decoding of signals**

(30) Priority: 09.11.1991 GB 9123863; 13.04.1992 GB 9208179
(71) Applicant: Arends, David, Coppull, Nr. Chorley, Lancashire PR7 5ED (GB); Ibrahim, Milan, Coppull, Nr. Chorley, Lancashire PR7 5ED (GB); Ross, John, St. Ninians, Stirling FK7 0EX, Scotland (GB); McGrorty, Patrick, Stirling FK8 1SY, Scotland (GB)
(72) Inventor: Arends, David, Coppull, Nr. Chorley, Lancashire PR7 5ED (GB); Ibrahim, Milan, Coppull, Nr. Chorley, Lancashire PR7 5ED (GB); Ross, John, St. Ninians, Stirling FK7 0EX, Scotland (GB); McGrorty, Patrick, Stirling FK8 1SY, Scotland (GB)
(74) Representative: Pidgeon, Robert John

(57) **Abstract**

Figure 4 shows a conventional decoder 24 for the decoding of received satellite television signals relayed from a satellite (not shown) . A card multiplexer 25 holds up to four authorisation cards in slots, 26, 27, 28 and 29. The choice of authorising card from which authorising data is sent to the decoder 24 can be made by manually depressing the correct push button (not shown) on the multiplexer 25. Alternatively the choice of card can be made using a remote control handset (not shown) . The decoder 24 has a "dummy" card 30 inserted in its conventional card slot which dummy card is connected via a flat cable (not shown) to the multiplexer.

## Description

The present invention relates to apparatus and a method of controlling the decoding of coded signals by one or more decoders and is concerned particularly although not exclusively with apparatus and a method of selectively controlling the decoding of coded audio and video signals by a plurality of decoders.

Apart from television signals transmitted conventionally from land based, or terrestrial, transmitters, television signals are increasingly being transmitted via satellites located in orbit around the earth, which relay the signals to terrestrial receivers, commonly in the form of a receiving dish located on the exterior of a building. The signals transmitted, via the satellite, are typically encoded in some way requiring the would-be viewer to install decoding apparatus in order to view the television programme on a television screen. In the case of most satellite television channels in the United Kingdom the decoding apparatus is sufficient to enable the user to decode and view many different channels.

However, some satellite television channels require a subscription fee to be paid before a user can watch a particular channel. Typically this involves the purchase or rental of a special card containing a micro chip which may be inserted into the decoder apparatus to authorise the decoder to decode the coded signals relating to that particular channel. If the subscription fee is not renewed, or for some other reason the card becomes invalid, the authorization code written onto the micro-chip on the card becomes invalid for the purposes of authorising the decoder to decode the coded signals for that channel. In this case the user is no longer able to watch programmes on that channel until the validity of the card is reinstated eg. by payment of the relevant subscription fee. Each card has a unique serial number which is known to the operating company. If a subscription has lapsed or if, for some other reason, the operating company want to withdraw the subscription, a signal is transmitted to the decoder apparatus informing it of the invalid serial number. If the decoder is presented with a card bearing that serial number it produces an electronic signal which invalidates the card.

Many households have more than one set of decoding apparatus and, accordingly, are able to watch simultaneously more than one satellite television channel. If a subscription is held for one of the subscription channels, different members of the household can simultaneously watch the subscription channel (using the subscription card) on one set of decoding apparatus and any of the other non-subscription channels (which does not require a subscription card) on the other set of decoding apparatus.

If subscription to more than one subscription channel is held then, using the two or more subscription cards, those subscription channels may be viewed simultaneously by different members of the household on different sets of decoding apparatus.

Recently it has become more popular to have multiple subscriptions, in which the subscriber obtains a single, combined subscription to more than one subscription channel and obtains a combined subscription card which contains, on its micro-chip, authorization codes authorising the decoder to decode the coded signals for the appropriate channels to which subscription has been made. Again, only the channels to which subscription has been made may be decoded.

The multiple subscription card system has a drawback in that where a household has two sets of decoding apparatus, it cannot simultaneously watch two subscription channels, even though it may have subscribed to those channels, unless a second subscription card is obtained. This is because each set of decoding apparatus requires a card to authorise it to decode the particular desired subscription channel. Where one multiple subscription card exists and there are two sets of decoding apparatus, only one of the sets of decoding apparatus can be made to decode a subscription channel at any given time ie. using the subscription card. The other set of decoding apparatus can be made to decode a non-subscription channel (for which it needs no card-authorization) but, unless the second card is obtained, it cannot simultaneously decode a second subscription channel.

Accordingly, an object of the present invention is to provide apparatus and a method for enabling a single authorization card to authorise more than one decoder.

According to a first aspect of the present invention there is provided a decoder control system, for use in the decoding of coded signals by two or more decoders, the decoders being arranged to decode the coded signals only when authorised to do so by an authorising means, the decoder control system comprising control means arranged to provide the two or more decoders with authorising data contained in the authorising means.

The control means may be arranged to provide a first decoder with a first set of authorising data and may be arranged to provide a second decoder with a second set of authorising data, the first and second sets of authorising data being contained in the authorising means.

The first set of authorising data may authorise the first decoder to decode a first coded signal and the second set of authorising data may authorise the second decoder to decode a second coded signal.

The first and second coded signals may comprise received television signals.

Preferably the authorising means comprises an authorising card on which authorising data is stored in electronic or magnetic form.

According to a second aspect of the present invention there is provided decoder control means for controlling the provision to two or more decoders of authorising data contained in an authorising means, the decoders being arranged to decode coded signals only when authorised to do so by authorising data from the authorising means, the decoder control means comprising detection means arranged to detect authorization request signals from two or more decoders, reading means to read authorising data stored in an authorising means and switching means arranged to send a first set of authorising data to a first decoder and to send a second set of authorising data to a second decoder.

The authorization request signals may correspond to requests by the decoders for authorization to decode particular coded signals such that the authorising data supplied by the decoder control to one particular decoder authorises that decoder to decode a particular coded signal.

Preferably the coded signals are received television signals.

The authorising means may comprise an authorising card containing authorising data stored in electronic or magnetic form.

The decoder control means may be arranged to send alternately the first set of authorising data to the first decoder and the second set of authorising data to the second decoder.

The invention also includes a decoder control system substantially as herein described when used with a decoder control means substantially as herein described.

According to another aspect of the present invention there is provided a control system for use in the control of a decoder, which decoder is arranged to decode coded signals only when authorised to do so by an authorising means, the control system comprising control means arranged to control the provision to the decoder of authorising data from a plurality of authorising means.

The control means may be arranged to selectively provide the decoder with authorising data from at least one of the plurality of authorising means in response to manually operable selector means located on or adjacent the control means.

Alternatively or additionally the control means may be arranged to selectively provide the decoder with authorising data from at least one of a plurality of authorising means in response to a remote signal. The remote signal may be arranged to be received from a remote handset.

In a preferred arrangement the control means may be arranged to automatically provide the decoder with authorising data from at least one of a plurality of authorising means in response to a request signal from the decoder. The control means may be arranged to provide sequentially the decoder with authorising data from each of a plurality of authorising means. the control means may be arranged to provide sequentially the decoder with authorising data from each of a plurality of authorising means until the decoder is provided with desired authorising data whereupon the sequential provision of authorising data from different authorising means may be arranged to cease and the control means may be arranged to provide the decoder with only the desired authorising data.

The or each authorising means may comprise an authorising card on which authorising data is stored in electronic or magnetic form.

According to a third aspect of the present invention there is provided a method of controlling the decoding of coded signals by two or more decoders arranged to decode coded signals only when authorised to do so by an authorising means, the method comprising detecting authorising request signals from the decoders, reading authorization data contained in an authorization means and sending appropriate authorization data to each decoder in response to its authorization request, thereby enabling each decoder to decode a coded signal.

The method may comprise the sending of authorization data to each decoder, which authorization data corresponds to the authorization request, which in turn corresponds to a particular coded signal to be decoded.

Preferably the method comprises a method of controlling the decoding of coded received television signals.

Preferably the method includes reading authorization data contained in an authorization means, which authorization means comprises an authorization card on which is stored authorization data in electronic or magnetic form.

The invention also includes apparatus substantially as herein described when used in a method substantially as herein described.

The present invention also includes any combination of the features or limitations referred to herein.

An embodiment of the present invention will now be described by way of example with reference to the accompanying diagrammatic drawings in which:
Figure 1 is a schematic diagram of a satellite television receiver system incorporating a decoder control system according to an embodiment of the present invention;
Figure 2 is a schematic circuit diagram of a decoder control unit for use with the decoder control system of Figure 1;
Figure 3 is a flow-diagram showing schematically the operation of the decoder control unit of Figure 2; and
Figure 4 shows control means for providing authorising data from a plurality of authorising cards to a decoder.

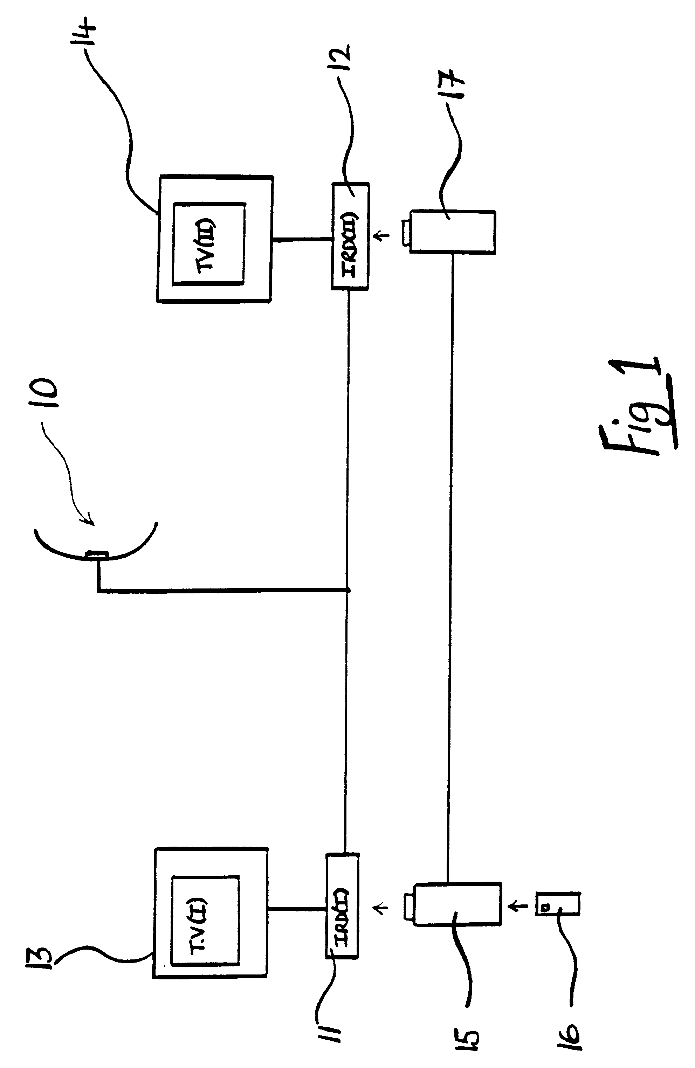

Referring particularly to Figure 1, a satellite dish receiver 10 receives coded satellite television signals from a satellite (not shown). The received signals are relayed to first and second integral receiver/decoders (IRDs) 11 and 12, which in use are arranged to decode the decoded signals to display television sound and pictures on first and second televisions 13 and 14 respectively.

A decoder control unit 15 is arranged to receive an authorization card 16. The decoder control unit 15 is adapted to be plugged into the first IRD 11 and is hard-wired to a "dummy" decoder control unit 17 which is adapted to be plugged into a second IRD 12.

In use, the first and second IRDs are able to receive and decode transmitted signals for non-subscription channels without the need for an authorization card. Transmitted signals for two non-subscription channels may be received and decoded simultaneously and watched simultaneously on the two televisions 13 and 14 without the need for authorization cards.

Where a subscription is held for a single subscription channel, an authorization card 16 is provided which must be inserted into the first IRD 11 to authorise it to decode coded signals of that channel. If a multiple or combined subscription is held, ie. in which a single authorization card may authorise the viewing of two or more subscription channels, then to view two subscription channels simultaneously, the authorization card 16 must be inserted into the decoder control unit 15. The decoder control unit 15 is then plugged into the card-receiving port of the first IRD 11. The decoder control unit 15 is also hard-wired to the dummy decoder control unit 17 which must be plugged into the card-receiving port of the second IRD 12.

When the users have selected which subscription channel is to be decoded by each IRD the individual IRDs seek authorization from the card 16 to decode the coded signals of those subscription channels. The authorization data stored on a micro-chip (not shown) of the card 16 may be read by each decoder, in the case of the first IRD 11 via the decoder control unit 15 and in the case of the second IRD 12 via the decoder control unit 15 and the dummy decoder control unit 17. Provided the card is able to authorise the decoding of both subscription channels (ie. provided the proper subscription has been made) then both subscription channels may be viewed simultaneously.

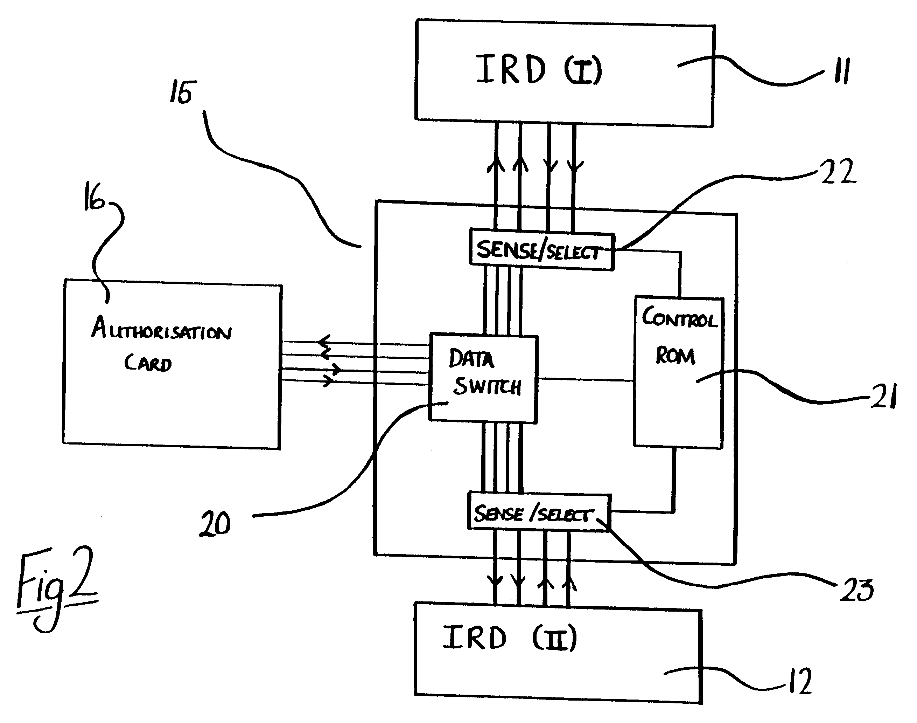

Referring particularly to Figure 2, the decoder control unit shown generally at 15 comprises a data switch 20, a control read-only memory (ROM) 21 and two sense/select units 22 and 23.

The authorization card 16 is plugged into the decoder control unit 15 and makes electrical connections with the data switch 20 as shown in the diagram. The decoder control unit 15 is plugged into the first IRD 11 and the second IRD 12 is connected to the decoder control unit 15 via the dummy decoder control unit 16 (shown in Figure 1) which is linked to the decoder control unit 15 by a cable (not shown). In use, when one of the IRDs is required to decode a subscription channel, it must periodically consult data written on the micro-chip of the authorization card. Thus every few seconds the IRD must make a connection with the authorization card. When two IRDs require connection to the authorization card their access must be controlled so that the card is connected to each IRD alternately.

This is achieved by the circuit schematically shown in Figure 2 in the following way.

When the first IRD 11 seeks to consult the data on the card 16, its request is sensed by sense/select unit 22. This request is then sent to the control ROM 21 which controls the data switch 20 so as to permit it to connect the card 16 and the first IRD 11.

If whilst the card 16 is connected to the first IRD 11 by means of the data switch 20, the second IRD 12 requests access to the card 16, this request is sensed by the sense/select unit 23 which sends the request to the control ROM 21. The control ROM 21, upon receiving this request checks whether data is being currently transferred from the card to the first IRD 11. If it is then the card is not yet free and the control ROM 21 waits for a predetermined time before checking the status of the card again. Once the card becomes free the control ROM 21 operates the data switch 20 so as to disconnect the first IRD 11 from the card 16 and to connect the second IRD 12 to the card 16. The process is repeated as necessary, the control ROM 21 controlling the switching of the data switch 20 in response to requests made by the IRDs 11 and 12. The control ROM 21 therefore ensures that the correct IRD receives its required information as necessary and at no time are both IRDs attempting to access the card 16. The operation of the control ROM 21 may be controlled either by software or hardware. The request signals from the IRDs may be sensed either by monitoring of a read/write voltage from the IRD or by analysing the data received from the IRD.

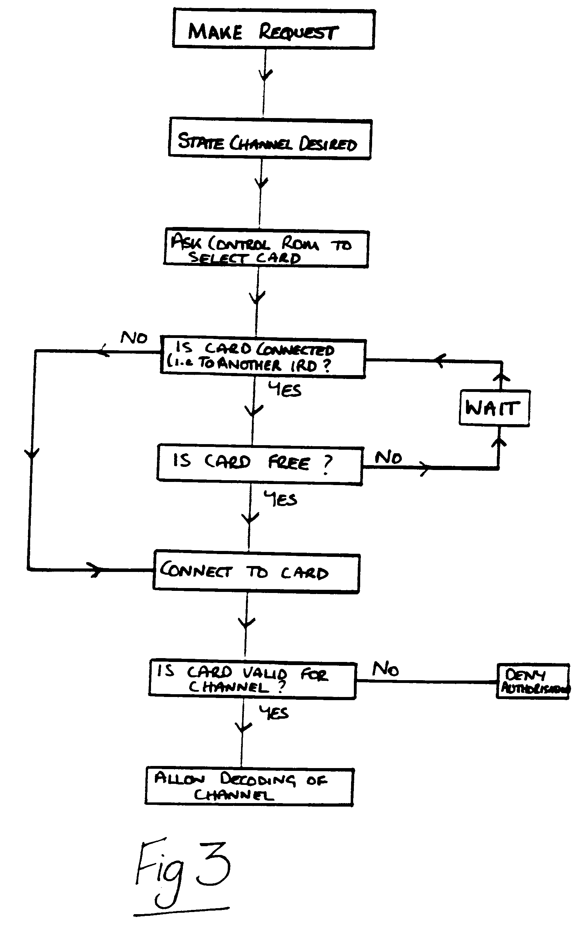

Referring to Figure 3, this shows in schematic flow-diagram form the procedure which each IRD must go through to obtain valid access to the card 16.

Firstly the IRD (11 or 12) makes a request to connect to the card 16. The identity of the channel required is notified to the sense/select unit. The sense/select unit then asks the control ROM 21 to select the card 16. The control ROM 21 then checks to see whether the card 16 is connected to another IRD. If the card 16 is not already connected to another IRD, the control ROM 21 connects it to the requesting IRD. If the card is already connected to another IRD the control ROM 21 checks to see whether the card is free for connection to the requesting IRD (ie. whether the card has finished sending data to the other IRD). If the card is not free, the control ROM 21 waits for a predetermined time and then returns to the check on whether the card is connected already. If the card is free the control ROM 21 connects the card 16 to the requesting IRD.

Once the requesting IRD has been connected to the card 16, the IRD checks whether the card is valid for the required channel. If the card is not valid for the required channel, authorization to decode that channel is denied and the user is not able to watch that particular channel. If, on the other hand, the card is valid for the desired channel, decoding of the channel is authorised and the user can watch the particular channel.

Both IRDs are therefore able to act as though they have their own authorization cards and may decode the coded channels authorised by the authorization card accordingly.

Only channels which have been legitimately subscribed to may be decoded, since legitimate subscription is necessary for the authorization codes to be present on the authorization card, without which no subscription channels can be decoded.

The present invention thereby enables the simultaneous viewing of two subscription channels, using two sets of decoder apparatus with only one authorization card, provided subscription to both channels has been made.

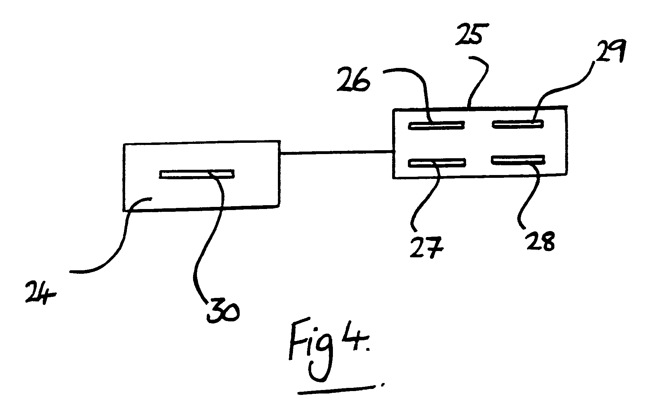

Referring now to Figures 4 this shows, schematically, control means arranged to control the provision of authorising data from more than one authorising card.

In particular, Figure 4 shows a conventional decoder 24 and a card multiplexer 25 which holds up to four authorisation cards in slots 26, 27, 28 and 29. The choice of authorising card from which authorising data is sent to the decoder 24 can be made by manually depressing the correct push-button (not shown) on the multiplexer 25. Alternatively the choice of card can be made using a remote-control handset (not shown). The decoder 24 has a "dummy" card 30 inserted in its conventional card slot which dummy card is connected via a flat cable (not shown) to the multiplexer.

An alternative embodiment provides for automatically switching the cards such that authorising data from different cards is sequentially provided to the decoder 24 until the decoder 24 receives the correct authorising data for the channel which it has been requested to decode. In this arrangement the decoder 24 sends a request signal to the card multiplexer 25 and when the multiplexer responds with the correct authorisation data, ie. the correct card is being read, the multiplexer locks on to the correct card.

This unit allows the use of several cards with one Videocrypt/Eurocrypt decoder, without the need for continuous card swapping.

Each of these multiplex units holds up to four cards, which are automatically enabled when their channel is selected.

Being only 17mm high the unit is designed to fit under the decoder/receiver, with a flat cable going to the card slot in the decoder, wherein the "dummy" card 30 is inserted. It has a very low power requirement, supplied by an external power supply in a moulded plug. This also means that almost no heat is generated, so requiring no ventilation.

The preferred means of detecting which channel has been selected is by intercepting the channel selection codes from the infra-red remote control (including up/down). Codes for all the most popular receivers will be preset, with the ability to learn new ones.

Once a channel has been selected all of the normal functions, in cluding authorise, will work.

Using a small row of switches at the back of the unit, the type of infra-red control can be selected. A mode can also be chosen that allows the automatic selection of the correct card, by sensing the data on each card.

Other features:
a) If more than four cards are required a slave unit can be attached to allow for more than four cards.
b) With just one card in the unit the multiplexer can be connected to two receiver/decoders using the above described apparatus, to allow the simultaneous viewing and recording of two separate channels; for example "Sky Movies" and the "Movie Channel", both of which use the same card.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A control system for use in the control of a decoder, which decoder is arranged to decode coded signals only when authorised to do so by an authorising means, characterised in that the control system includes first control means arranged to control the provision to the decoder of authorising data from a plurality of authorising means.

2. A control system according to claim 1 wherein the control means is arranged to selectively provide the decoder with authorising data from at least one of the plurality of authorising means in response to manually operable selector means located on or adjacent the control means.

3. A control system according to claim 1 or claim 2 wherein the control means is arranged to selectively provide the decoder with authorising data from at least one of a plurality of authorising means in response to a remote signal.

4. A control system according to any of claims 1 to 3 wherein the control means is arranged to automatically provide the decoder with authorising data from at least one of a plurality of authorising means in response to a request signal from the decoder.

5. A control system according to any of claims 1 to 4 wherein the control means is arranged to provide sequentially the decoder with authorising data from each of a plurality of authorising means.

6. A control system according to any of claims 1 to 5 wherein the or each authorising means comprises an authorising card on which authorising data is stored in electronic or magnetic form.

7. A control system according to any of claims 1 to 6 for use in the decoding of coded signals by two or more decoders, the decoders being arranged to decode the coded signals only when authorised to do so by an authorising means, the decoder control system comprising second control means arranged to provide the two or more decoders with authorising data contained in at least one of the authorising means.

8. A control system according to claim 7 wherein the second control means is arranged to provide a first decoder with a first set of authorising data and is arranged to provide a second decoder with a second set of authorising data, the first and second sets of authorising data being contained the at least one authorising means.

9. A control system according to claim 7 or claim 8 wherein the first set of authorising data authorises the first decoder to decode a first coded signal and the second set of authorising data authorises the second decoder to decode a second coded signal.

10. A control system according to any of claims 1 to 9 wherein at least one of the coded signals comprises a television signal.
